# EUROPÄISCHE PATENTSCHRIFT

(11) **EP 1 107 890 B1**
(45) Veröffentlichungstag und Bekanntmachung des Hinweises auf die Patenterteilung: **04.12.2002**
(21) Anmeldenummer: 99940113.6
(22) Anmeldetag: 03.08.1999
(51) Int. Cl.: B60S 1/52, B60S 1/38, B05B 1/14

(54) **SCHEIBENWASCHDÜSE MIT EINGELAGERTEM DÜSENCHIP**
WINDSCREEN WASHER JET WITH AN INTEGRATED JET CHIP
BUSE DE LAVE-GLACE A PIECE INTEGREE

(30) Priorität: 26.08.1998 DE 19838764
(43) Veröffentlichungstag der Anmeldung: 20.06.2001
(73) Patentinhaber: A. Raymond & Cie, 38028 Grenoble (FR)
(72) Erfinder: LESSER, Hans-Jürgen, D-79618 Rheinfelden (DE); HÄNSEL, Mathias, D-79595 Rümmingen (DE)
(74) Vertreter: Kirchgaesser, Johannes, Dipl.-Ing.
(86) Internationale Anmeldenummer: EP9905567
(87) Internationale Veröffentlichungsnummer: WO00012361

(56) Entgegenhaltungen:
- WO-A-80/00927
- DE-A- 3 935 318
- GB-A- 1 017 027
- GB-A- 2 082 051

## Beschreibung

Die Erfindung geht aus von einer Scheibenwaschdüse mit einer Kammer zum Einlagem eines mit Strömungskanälen versehenen Düsenchip nach **EPS 0 044 331.** Die Strömungskanäle sind bei diesem bekannten Düsenchip beiderseits einer sogenannten Oszillationskammer angeordnet, welche zur Bildung von Wasserwirbel dient und in Verbindung mit den Kanälen und der Geometrie der Seitenwände dafür sorgt, daß der aus der Düse austretende Wasserstrahl eine oszillierende Bewegung ausführt. Zweck der oszillierenden Bewegung ist es, daß der austretende Wasserstrahl auf der Windschutzscheibe schnell hin- und herbewegt wird und die Scheibe dadurch über die vom Scheibenwischer bestrichene Fläche gleichzeitig benetzt wird.

Dieses Oszillationsverfahren benötigt eine relativ große Wassermenge und führt damit zu einem schnellen Verbrauch des Spritzwasservorrats. Außerdem ist dieser gefächerte Wasserstrahl sehr empfindlich gegen den Fahrtwind und wird von diesem, insbesondere bei schneller Fahrt, heruntergedrückt, so daß die obere Hälfte der Scheibe nur schlecht benetzt wird und der Scheibenwischer Schlieren auf der Scheibe hinterläßt.

Aus **WO 80/00 927** ist es femer bekannt, durch Einfügung eines Teilers vor der verengten Austrittsöffnung des Düsenchips den fächerförmig austretenden, oszillierenden Wasserstrahl zu teilen, wobei der Teiler in solchem Abstand vor der Austrittsöffnung angeordnet ist, daß die Oszillationsbewegung nicht gestört wird. Durch den Teiler soll offenbar der oszillierende Wasserstrahl in seinem Mittelbereich unterbunden werden, damit der entsprechende Scheibenbereich nicht benetzt wird.

Aufgabe der Erfindung ist es, die Kanalanordnung und -ausbildung im Düsenchip so zu gestalten, daß die austretenden Wasserstrahlen mit erheblich größerer Kraft austreten und dadurch die Scheibe effektiver benetzt wird. Außerdem soll der Wasserverbrauch gesenkt werden.

Diese Aufgabe wird erfindungsgemäß im wesentlichen dadurch gelöst, daß von der zentralen Wasserdurchflußöffnung mehrere etwa halbrunde Kanalrinnen nach außen geführt sind, welche am Austrittsende eine Tiefe von maximal 0,2 mm und eine Breite von maximal 0,4 mm aufweisen. Durch die Verwendung von Düsenchips ist es möglich, Strömungskanäle mit kleinsten Strömungsquerschnitten zu realisieren, wodurch wiederum der Wasserverbrauch deutlich gesenkt wird. Die Montage der Chips ist denkbar einfach und erfolgt zweckmäßigerweise bereits im Werkzeug. Bei eventuell auftretendem Verschleiß oder Verstopfung der Strömungskanäle lassen sich die Chips leicht gegen neue auswechseln.

Aus **GB - A - 2 082051** ist eine Scheibenwaschdüse bekannt, bei der im Düsenkörper mehrere, auf die Scheibenoberfläche gerichtete Düsen in den Düsenkörper eingesetzt sind. Hierbei sind zwar ebenfalls Spritzdüsen mit sehr kleinem Düsenquerschnitt vorgesehen. Doch sind die Bohrungen dieser Spritzdüsen an der Austrittsöffnung V-förmig eingeschnitten, so daß das zugeführte Spritzwasser bei jeder Düse schließlich in einem flachen Strahl austritt.

Weitere Fortbildungen und Ausgestaltungen der Erfindung ergeben sich aus den Merkmalen der Unteransprüche, durch welche im wesentlichen folgende Vorteile erreicht werden:

Durch die sich zum Austrittsbereich verengende Breite der Kanalrinnen gemäß Anspruch 2 und insbesondere Anspruch 3 ergibt sich eine enorme Steigerung der Durchflußgeschwindigkeit und damit eine starke Bündelung des Wasserstrahls bis zum Auftreffen auf die Windschutzscheibe.

Durch die Einformung von Aussparungen zwischen den Kanalrinnen im Bereich der Verengungen gemäß Anspruch 4 ergibt sich ferner eine Mikrobewegung bei den relativ dünnen Zwischenwänden aufgrund des ständig wechselnden Druckaufbaus bzw. Druckabbaus beim Betätigen der Scheibenwaschanlage. Dadurch wird die Ablagerung vom Kalk oder sonstiger Krusten an den Kanalwänden verhindert.

Hierzu ist es besonders zweckmäßig, wenn der Chip aus einem im Vergleich zum harten Kunststoffmaterial des Düsenkörpers relativ weichelastischem, thermoplastischem Elastomer besteht. Dadurch reagieren die Zwischenwände bei Druckänderung flexibel. Auch wird die Dichtigkeit zwischen den Außenflächen des Chips und den Innenwänden des Düsenkörpers verbessert.

In der Zeichnung sind zwei Ausführungsbeispiele der Erfindung dargestellt, welche nachfolgend näher erläutert werden sollen. Es zeigt:
- Fig. 1: ein Scheibenwaschdüsengehäuse mit angespritztem Düsenchip in Draufsicht,
- Fig. 2: das gleiche Scheibenwaschdüsengehäuse im Schnitt gemäß Linie II-II in Fig. 1
- Fig. 3: das gleiche Scheibenwaschdüsengehäuse in Vorderansicht mit Blick in Richtung des Pfeiles V,
- Fig. 4: das gleiche Scheibenwaschdüsengehäuse im Schnitt wie Fig. 2, jedoch mit eingesetztem Chip,
- Fig. 5: eine vergrößerte Draufsicht auf den Chip,
- Fig. 6: einen Schnitt durch die Düsenkanäle gemäß Linie VI - VI in Figur 5,
- Fig. 7: einen Schnitt durch die Düsenkanäle gemäß Linie VII - VII in Figur 5,
- Fig. 8: eine andere Form des Düsenchip mit Aussparungen zwischen den Verengungen der Kanalrinnen,
- Fig. 9: die Vorderansicht hierzu mit Blick auf den Austrittsbereich der Kanalrinnen,
- Fig. 10: die Scheibenwaschdüse im eingebauten Zustand,
- Fig. 11: eine andere Ausführungsform der Erfindung mit im Schnitt dargestelltem Gehäuse vor dem Einsetzen des Düsenchips,
- Fig. 12: die gleiche Ausführungsform nach dem Einsetzen des Düsenchips,
- Fig. 13: das zugehörige Gehäuse in Draufsicht,
- Fig. 14: die zugehörigen Düsenchipse in Draufsicht und
- Fig. 15: das auf einem Scheibenwischerbügel befestigte Gehäuse mit eingesetzten Düsenchips.

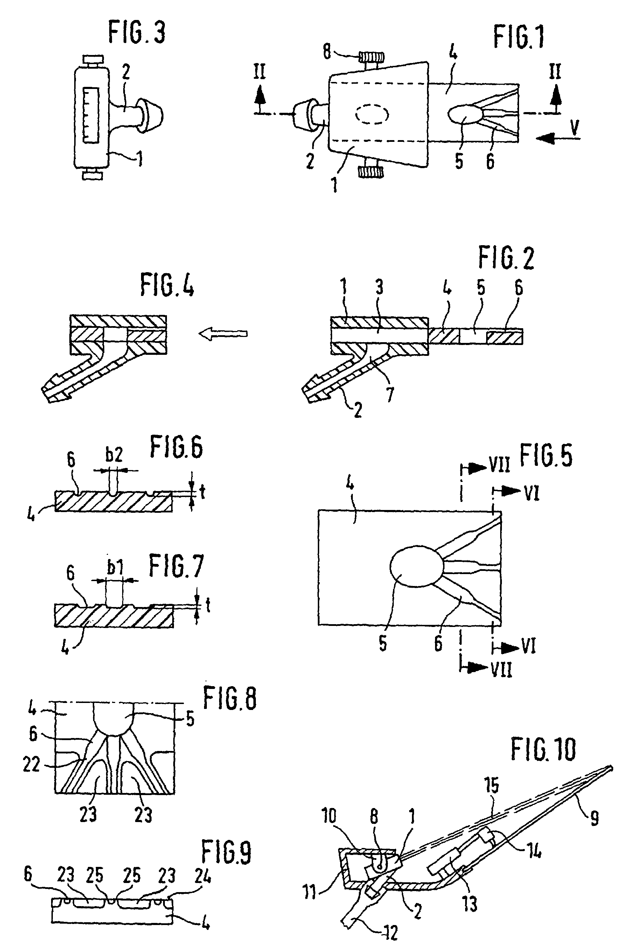

Die in den Figuren dargestellte Scheibenwaschdüse besteht aus einem Gehäuse **1**, welches zweckmäßigerweise durch Verspritzen von hartem Kunststoffmaterial hergestellt wird. An der Unterseite des Gehäuses **1** ist ein Anschlußstutzen **2** für die Einleitung des Spritzwassers angeformt. Im Gehäuse **1** ist eine im Querschnitt rechteckige Kammer **3** eingelassen, welche zum Einlagern eines sogenannten Düsenchip **4** dient, welcher vorzugsweise aus einem weichelastischen thermoplastischen Elastomer-Material besteht und mit dem Gehäuse im gleichen Werkzeug verspritzt wird. Dieser Chip **4** weist den gleichen, rechteckigen Querschnitt auf wie die Kammer **3** und besitzt eine zentrale Durchflußöffnung **5** für das Spritzwasser, wobei der Chip **4** auf seiner ganzen Dicke von der Öffnung **5** durchdrungen wird. An der Oberseite des Chips **4** sind mehrere, halbrunde Kanalrinnen **6** eingeformt, welche von der zentralen Öffnung **5** fächerförmig nach außen geführt sind. Nach dem Einführen des Chips **4** in die Kammer **3** befindet sich die Öffnung **5**, wie aus **Figur 4** ersichtlich, genau über der Zuführleitung **7** des Anschlußstutzens **2**.

Das von einer nicht dargestellten Scheibenwaschanlage zugeführte Spritzwasser gelangt so durch den Waschdüsenkörper **1** und die Öffnung **5** in die Kanalrinnen **6**, welche im eingelagerten Zustand des Chip **4** von der Kammerwänden wasserdicht abgeschlossen sind.

Die Kanalrinnen **6** weisen an ihrem Austrittsende eine Tiefe von 0,1 mm bis maximal 0,2 mm und eine Breite von 0,2 mm bis maximal 0,4 mm auf. Sie sind vorzugsweise mit einer sich zum Austrittsende verengenden Kanalbreite in den Chip **4** eingeformt, wobei sich die Rinnen **6** von einer Ausgangsbreite **b1** von ca. 0,5 mm bis 0,7 mm auf die Austrittsbreite von ca. 0,1 mm bis 0,2 mm verengen. Diese Kanalverengung führt zu einer enormen Beschleunigung des durchströmenden Wassers.

Wie aus **Fig. 8** und **9** ersichtlich, können zwischen den Kanalrinnen **6** im Bereich der Verengungen **22** Aussparungen **23** in die Oberfläche **24** des Düsenchip **4** eingeformt sein, welche durch relativ dünne Zwischenwände **25** von den Kanalrinnen **6** getrennt sind. Dies führt aufgrund des ständig wechselnden Druckaufbaus bzw. Druckabbaus des Spritzwassers beim Betätigen der Scheibenwaschanlage zu einer elastischen Mikroverformung an den wenn auch nur geringfügig flexiblen Zwischenwänden **25** und verhindert die Ablagerung von Kalk oder sonstigen Schmutzpartikeln aus dem Spritzwasser. Diese elastische Mikroverformung kann noch unterstützt werden durch Verwendung von weichelastischen thermoplastischen Kunststoffmaterial bei der Herstellung der Düsenchips **4**.

**Figur 10** zeigt die Scheibenwaschdüse im eingebauten Zustand unterhalb der Windschutzscheibe **9**. Das Gehäuse **1** ist hierbei mittels eines Haltebügels **10** und am Gehäuse **1** angeformten Haltezapfen **8** in einer Nische **11** des Fensterrahmens schwenkbär gelagert und über einen am Anschlußstutzen **2** aufgesteckten Schlauch **12** mit der Pumpe einer Scheibenwaschanlage verbunden. Unterhalb der Windschutzscheibe **9** ist ferner ein Scheibenwischer **13** mit Wischerbügel **14** in seiner Ruhestellung angedeutet. Aus dem Scheibenwaschdüsengehäuse **1** wird der Wasserstrahl **15** oberhalb des Wischerblatts **14** auf die Windschutzscheibe **9** gespritzt, wobei der Strahl **15** durch die Geometrie der Kanalrinnen **6** im Düsenchip **4** scharf gebündelt wird und in etwa geradlinig mit hoher Geschwindigkeit auf die Scheibe **9** auftrifft. Durch die schwenkbare Halterung des Zapfens **8** im Haltebügel **10** läßt sich die Richtung des austretenden Wasserstrahls **14** zur Scheibe **9** entsprechend dem gewünschten Auftreffwinkel optimal einstellen.

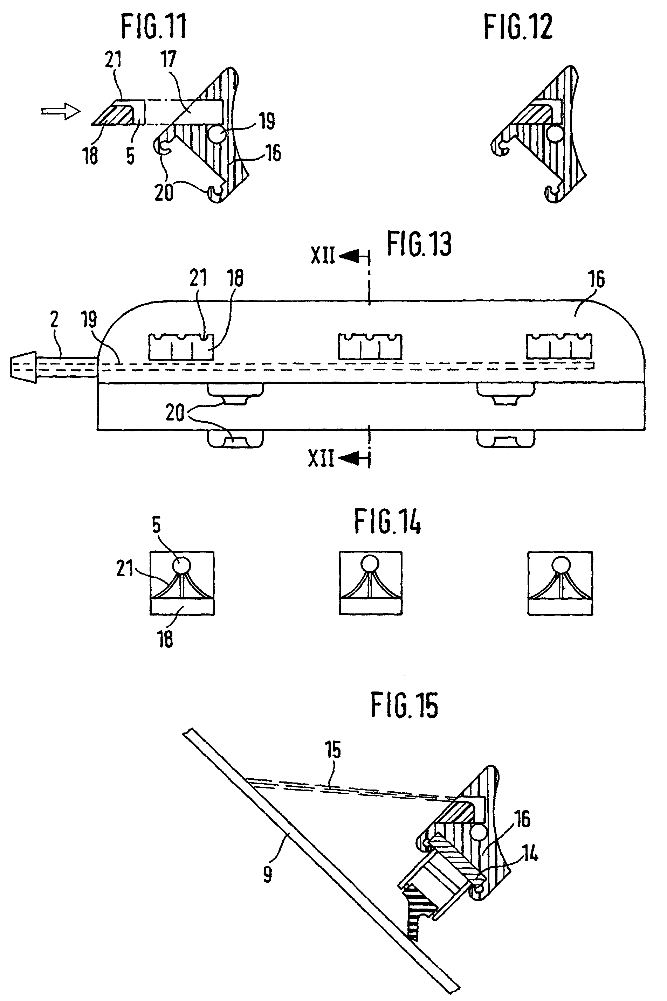

In den **Figuren 11** bis **15** ist eine andere Ausführungsform der Scheibenwaschdüse dargestellt. Diese besteht aus einem länglichen Gehäuse **16** mit mehreren Kammern **17** zum Einlegen von Düsenchips **18**. Das Gehäuse **16** ist, wie aus Figur **13** ersichtlich, dazu bestimmt, auf dem Wischerbügel **14** eines Scheibenwischers **13** befestigt zu werden, so daß die Scheibenwaschdüse mit dem Wischerbügel **14** gemeinsam über die Windschutzscheibe **9** fährt. Das Gehäuse **16** besitzt an einem Ende den Anschlußstutzen **2**, durch welchen das Spritzwasser über einen im Gehäuse **1** eingeformten Kanal **19** zu den einzelnen Kammern **17** geführt wird. An der Unterseite des Gehäuses **16** sind aufbiegbare Halteklammern **20** angeformt, welche den Wischerbügel **14** nach dem Aufsetzen des Gehäuses **16** hintergreifen.

Die Düsenchips **18** sind ähnlich wie die Chips **4** der ersten Ausführungsform ausgebildet und mit Kanalrinnen **21** versehen, welche von der zentralen Öffnung **5** fächerförmig nach außen verlaufen und die gleiche Querschittsgeometrie aufweisen wie die Kanalrinnen **6** der Chips **4.** Der austretende Wasserstrahl **15** trifft scharf gebündelt auf die Windschutzscheibe **9** auf und wandert immer mit dem Scheibenwischerbügel **14** über die Windschutzscheibe **9** hin und her.

## Patentansprüche

1. Scheibenwaschdüse bestehend aus einem Gehäuse (1) mit einem Anschlußstutzen (2) für das Spritzwasser und einer Kammer (3) zum Einlagern eines mit Strömungskanälen versehenen Düsenchip (4), wobei das von der Scheibenwaschanlage zugeführte Spritzwasser durch das Gehäuse (1) in die Kammer (3) und von dort in fächerförmig angeordnete Kanalrinnen (6) gelangt, und wobei die in den Chip (4) eingeformten Kanalrinnen (6) nach einer Seite offen sind und im eingelagerten Zustand des Chip (4) von den Kammerwänden wasserdicht abgeschlossen sind, **dadurch gekennzeichnet, daß** von der zentralen Wasserdurchflußöffnung (5) mehrere halbrunde Kanalrinnen (6) nach außen geführt sind, welche an ihrem Austrittsende eine Tiefe von 0,1 bis max. 0,2 mm und eine Breite von 0,2 bis max 0,4 mm aufweisen.

2. Scheibenwaschdüse nach Anspruch 1, **dadurch gekennzeichnet, daß** die Kanalrinnen (6) mit einer sich zum Austrittsbereich verengenden Kanalbreite b in den Chip (4) eingeformt sind.

3. Scheibenwaschdüse nach Anspruch 2, **dadurch gekennzeichnet, daß** die Kanalrinnen (6) sich von einer Ausgangsbreite b1 von 0,5 bis o,7 mm auf eine Austrittsbreite b2 von 0,1 bis 0,2 mm verengen.

4. Scheibenwaschdüse nach Anspruch 2 oder 3, **dadurch gekennzeichnet, daß** zwischen den Kanalrinnen (6) im Bereich der Verengungen (22) Aussparungen (23) in die Chipoberfläche (24) eingeformt sind, welche durch relativ dünne Zwischenwände (25) von den Kanalrinnen (6) getrennt sind.

5. Scheibenwaschdüse nach Anspruch 4, **dadurch gekennzeichnet, daß** der Chip (4) aus einem im Vergleich zum harten Material des Waschdüsenkörpers (1) relativ weichelastischen ther noplastischen Elastomer - Material besteht.

## Claims

1. A screen washer jet comprising a housing (1) with a connecting portion (2) for the spray water and a chamber (3) for the incorporation of a jet chip (4) provided with flow passages, wherein the spray water which is supplied by the screen washer system passes through the housing (1) into the chamber (3) and from there into passage channels (6) which are arranged in a fan configuration and wherein the passage channels (6) which are formed into the chip (4) are open towards one side and in the incorporated condition of the chip (4) are water-tightly closed off by the chamber walls, **characterised in that** a plurality of half-round passage channels (6) are passed outwardly from the central water through-flow opening (5), which passage channels (6) at their discharge end are of a depth of 0.1 to a maximum of 0.2 mm and a width of 0.2 to a maximum of 0.4 mm.

2. A screen washer jet according to claim 1 **characterised in that** the passage channels (6) are formed into the chip (4) with a passage width b which narrows to the discharge region.

3. A screen washer jet according to claim 2 **characterised in that** the passage channels (6) narrow from an initial width b1 of 0.5 to 0.7 mm to a discharge width b2 of 0.1 to 0.2 mm.

4. A screen washer jet according to claim 2 or claim 3 **characterised in that** formed into the chip surface (24) between the passage channels (6) in the region of the narrowed portions (22) are recesses (23) which are separated from the passage channels (6) by relatively thin intermediate walls (25).

5. A screen washer jet according to claim 4 **characterised in that** the chip (4) comprises a thermoplastic elastomer material which is relatively soft-elastic in comparison with the hard material of the washer jet body (1).

## Revendications

1. Buse de lave-glace se composant d'un boîtier (1) comprenant une tubulure de raccordement (2) de l'arrivée d'eau à projeter et une chambre (3) pour le montage d'une pièce intégrée (4) munie de canaux d'écoulement, l'eau à projeter amenée par le dispositif lave-glace pénétrant en l'occurrence dans la chambre (3) et de là dans des canaux en forme de goulottes (6) disposés en éventail et lesdits canaux en forme de goulottes (6) réalisés par formage dans la pièce intégrée (4) étant en l'occurrence ouverts vers un côté et, lorsque la pièce (4) est insérée en position, étant obturés de manière étanche à l'eau par les parois de la chambre, **caractérisé en ce que**, depuis l'ouverture d'écoulement d'eau centrale (5) plusieurs canaux d'écoulement de forme semi-circulaire (6) s'étendent vers l'extérieur, qui présentent, au niveau de leur extrémité de sortie, une profondeur de 0,1 à 0,2 mm au maximum et une largeur de 0,2 à 0,4 mm au maximum.

2. Buse de lave-glace selon la revendication 1, **caractérisée en ce que** les canaux en forme de goulotte (6) sont réalisés solidaires par formage de la pièce (4) avec une largeur b allant en s'amenuisant en direction de la zone de sortie.

3. Buse de lave-glace selon la revendication 2, **caractérisée en ce que** la largeur des canaux en forme de goulottes (6) s'amenuise progressivement d'une valeur de départ b1 comprise entre 0,5 et 0,7 mm à une valeur de sortie b2 comprise entre 0,1 et 0,2 mm.

4. Buse de lave-glace selon la revendication 2 ou 3, **caractérisée en ce que** sont formés, dans la surface (24) de la plèce intégrée, entre les canaux en formé de goulottes (6), dans la zone de leur rétrécissement (22), des évidements (23), qui sont séparés des canaux en forme de goulottes (6) par des parois intermédiaires (26) relativement minces.

5. Buse de lave-glace selon la revendication 4, **caractérisée en ce que** la pièce intégrée (4) est réalisée dans un matériau élastomère thermoplastique à cédage élastique souple comparativement a la matière dure constituant le corps de la buse de lave-glace (1).
